# EUROPEAN PATENT SPECIFICATION

(11) **EP 3 789 619 B1**
(45) Date of publication and mention of the grant of the patent: **10.05.2023**
(21) Application number: 19212067.3
(22) Date of filing: 28.11.2019
(51) Int. Cl.: F15B 11/00, B66F 11/04, F15B 11/044, F15B 19/00, F15B 20/00, F15B 13/01, F15B 13/02

(54) **CONTROL VALVE, DERRICKING CYLINDER AND WORKING METHOD THEREOF, AERIAL WORK PLATFORM**
STEUERUNGSVENTIL, WIPPZYLINDER UND ARBEITSVERFAHREN DAVON, LUFTARBEITSPLATTFORM
SOUPAPE DE COMMANDE, CYLINDRE DE RELEVAGE ET SON PROCÉDÉ DE FONCTIONNEMENT, PLATEFORME DE TRAVAIL AÉRIENNE

(30) Priority: 06.09.2019 CN 201910841119
(43) Date of publication of application: 10.03.2021
(73) Proprietor: Zhejiang Dingli Machinery Co., LTD., Leidian Town Deqing, Zhejiang 313219 (CN)
(72) Inventor: XU, Shugen, Huzhou, Zhejiang 313219 (CN)
(74) Representative: Tiburzi, Andrea

(56) References cited:
- WO-A1-2009/000471
- US-A1- 2013 213 216
- US-B1- 6 308 612

## Description

### TECHNICAL FIELD

The present disclosure relates to the field of aerial work, and more particularly to a control valve, a derricking cylinder and the working method thereof, an aerial work platform.

### BACKGROUD

The aerial work platform is an advanced aerial work mechanism that can greatly improve the work efficiency, safety and comfort of air construction workers and reduce labor intensity. It has been widely used in developed countries. The use of aerial work platforms in China is also becoming more and more extensive, such as the initial general municipal street lamp maintenance, garden tree trimming, etc.. With the rapid development of China's economy, The demands for aerial work platforms in engineering construction, industrial installation, equipment maintenance, plant maintenance, shipbuilding, electric power, municipal administration, airports, communications, gardens, and transportation are growing.

Chinese patent with appl. No.: CN201810449467.2 discloses an aerial work platform including a lifting portion and a walking portion, the walking portion including a base, the lifting portion including a folding arm, a main arm, a secondary arm and a work bucket, which are sequentially connected. One end of the folding arm is hinged to a turntable, the turntable is connected to the base by a slewing bearing. One end of the main arm is hinged to the other end of the folding arm, one end of the secondary arm is hinged to the other end of the main arm. The work bucket is connected to the other end of the secondary arm. A small arm head is provided at a joint of the main arm connected with the secondary arm, and a small arm leveling cylinder is provided between the small arm head and the main arm. The folding arm is a telescopic structure or is composed of a link mechanism, and the folding arm is internally provided with a folding arm telescopic cylinder for controlling the telescopic movement of the folding arm. A folding arm derricking cylinder is provided between the folding arm and the turntable. The main arm has a retractable structure, and is internally provided with a main arm telescopic cylinder for controlling the main arm's telescopic movement. A main arm derricking cylinder is provided between the main arm and the folding arm, and a secondary arm derricking cylinder is provided between the secondary arm and the main arm.

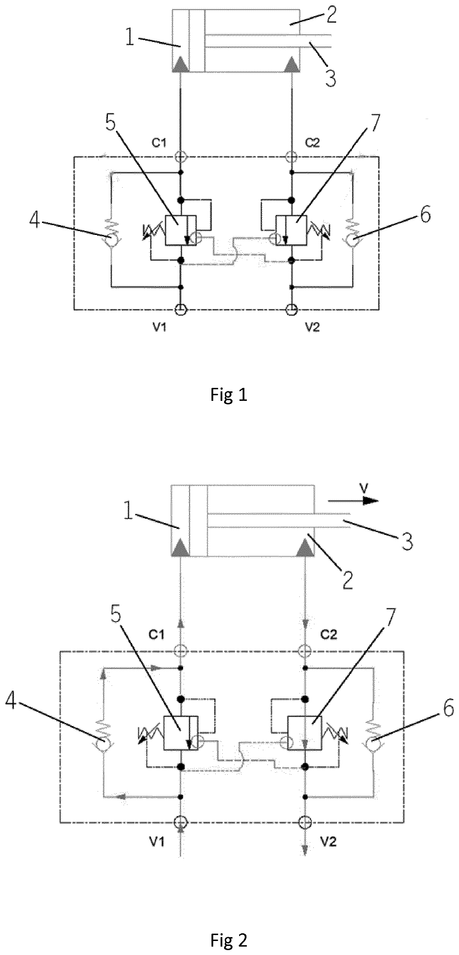

The conventional derricking cylinder shown in FIG. 1 includes a single rod double acting piston type hydraulic cylinder and a control valve, and the control valve is used for controlling the rod cavity 2 and the rodless cavity 1 of the hydraulic cylinder respectively to perform turn-on or turn-off with the oil supply pressure circuit or the oil return system. The control valve includes a first balance valve and a second balance valve, the first balance valve includes a first one-way functional portion 4 and a first overflow function portion 5. The second balance valve includes a second one-way functional portion 6 and a second overflow function portion 7, and the control port of the first overflow function portion 5 communicates with the oil outlet of the second overflow function portion 7. The control port of the second overflow functional portion 7 communicates with the oil outlet of the first overflow function portion 5. The port C1 of the first balance valve located at one end of the oil outlet of the first one-way function portion 4 is in communication with the rodless cavity of the hydraulic cylinder 1, and the port C2 of the second balance valve located at one end of the oil outlet of the second one-way function portion 6 communicates with the rod cavity 2 of the hydraulic cylinder.

When the amplitude varies upwardly, as shown in FIG. 2, the pressure oil enters the first balance valve from the port V1 of the first balance valve at the oil inlet end of the first one-way functional portion 4, and then flows out from the port C1 through the first one-way functional portion 4, while a part of the pressure oil flows from the oil outlet of the first overflow function portion 5 into the control port of the second overflow function portion 7, and turns on the second overflow function portion 7. The pressure oil flowing out from the port C1 flows into the rodless cavity 1 of the hydraulic cylinder, at the same time the hydraulic oil of the rod cavity 2 of the hydraulic cylinder passes through the second overflow function portion 7, and discharges from the port V2 of the second balance valve located at one end of the oil inlet port of the second one-way functional portion. The piston rod 3 of the hydraulic oil cylinder is extended, and the amplitude of the lifting arm of the aerial work platform varies upward.

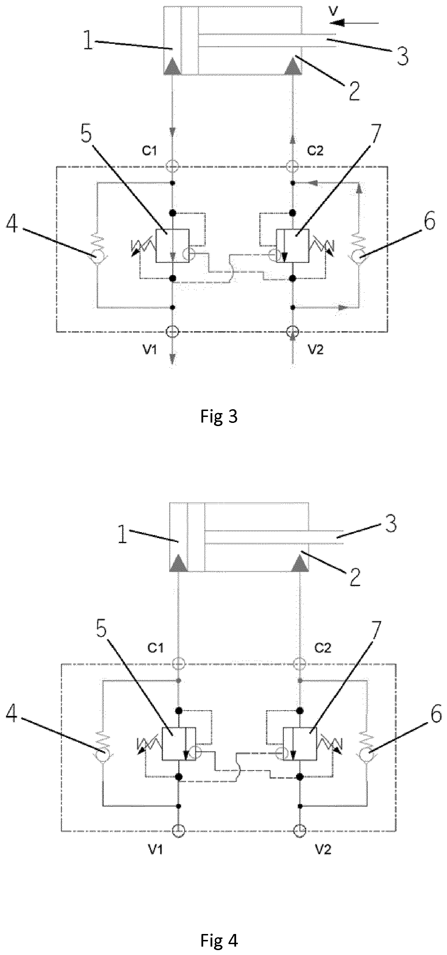

When the amplitude varies downwardly, as shown in FIG. 3, the pressure oil enters the second balance valve from the port V2 of the second balance valve at the oil inlet end of the second one-way function portion 6, and then flows out from the port C2 through the second one-way function portion 6, while a part of the pressure oil flows from the oil outlet of the second overflow function portion 7 into the control port of the first overflow function portion 5, and turns on the first overflow function portion 5. The pressure oil flowing out from the port C2 flows into the rod cavity 2 of the hydraulic cylinder, and the return oil of the rodless cavity 1 of the hydraulic cylinder passes through the first overflow function portion 5, and discharges from the port V1 of the first balance valve located at one end of the oil inlet port of the first one-way function portion 4. The piston rod 3 of the hydraulic oil cylinder is retracted, and the amplitude of the lifting arm of the aerial work platform varies downwardly.

When at rest, as shown in FIG. 4, the oil supply system does not supply the hydraulic oil to the hydraulic cylinder, and the rodless cavity 1 of the hydraulic cylinder and the oil of the rod cavity 2 are sealed by the first balance valve and the second balance valve. The rodless cavity 1 maintains high pressure, the rod cavity 2 maintains a relatively high pressure, and the oil pressure of the rodless cavity 1 is balanced with the oil pressure of the rod cavity 2 and the gravity of the lifting arm. The piston rod 3 of the hydraulic cylinder is neither extended, nor retracted. The lifting arm remains at rest.

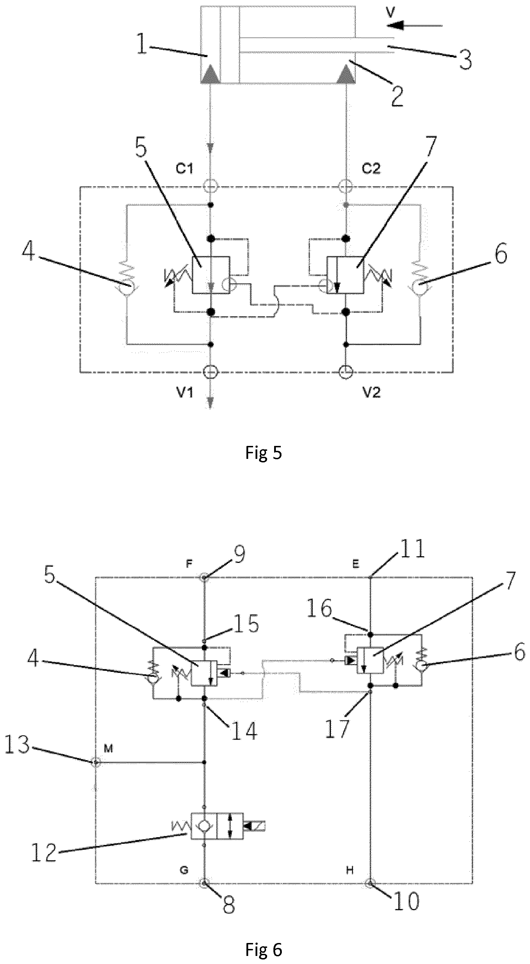

Due to the complicated structure of the balance valve, once the first balance valve connected to the rodless cavity 1 fails, as shown in FIG. 5, the oil of the rodless cavity 1 of the hydraulic cylinder enters the oil return system, and the piston rod 3 of the hydraulic cylinder continues to retract, the lifting arm descends. When the aerial work platform is at aerial work state, it is easy to cause the work bucket to tilt and cause the operator to fall, even the gravity centre position of the whole machine exceeds the tilting line, resulting in the overall tilting of the aerial work platform, thereby a serious accident occurs.

The relevant prior art comprises the patent US 6308612 B1, the patent application WO 2009/000471 A1 and the patent application US 2013/213216 A1

### SUMMARY

The purpose of the present disclosure is to make up for the defects of the prior art, and to provide a control valve, a derricking cylinder and a working method thereof, and an aerial work platform, which prevent the balance valve of the derricking cylinder and the rodless cavity from failing, thereby resulting in accident.

According to a first aspect of the present invention, a control valve according to claim 1 is provided.

Further, both the first overflow function portion and the second overflow function portion may be pilot type structures, and a spring side control cavity of the first overflow function portion may communicate with the oil outlet of the first overflow function portion, a spring-free side control cavity of the first overflow function portion may communicate with the oil inlet of the first overflow function portion; and a spring side control cavity of the second overflow function portion may communicate with the oil outlet of the second overflow function portion, and a spring-free side control cavity of the second overflow function portion may be in communication with the oil inlet of the second overflow function portion.

Further, the valve body surface may be further provided with a fifth port M connected to the oil circuit between the switch valve and the first balance valve, and the hydraulic sensor is arranged on the fifth port M.

According to a second aspect of the present invention, a derricking cylinder includes a hydraulic cylinder and a control valve according to the first aspect, the hydraulic cylinder is a single rod double acting piston type hydraulic cylinder, and the second port F communicates with a rodless cavity of the hydraulic cylinder, the fourth port E communicates with a rod cavity of the hydraulic cylinder.

According to a third aspect of the present invention, a working method of a derricking cylinder includes a hydraulic cylinder and a control valve according to the first aspect. The hydraulic cylinder is a single rod double acting piston type hydraulic cylinder. The second port F is in communication with the rodless cavity of the hydraulic cylinder, and the fourth port E is in communication with the rod cavity of the hydraulic cylinder; the working method includes:
turning on the switch valve and pressure oil flowing from the first port G into the control valve, and flowing out of the control valve from the second port F through the switch valve and the first balance valve, and then flowing into the rodless cavity of the hydraulic cylinder, the oil in the rod cavity of the hydraulic cylinder flowing from the fourth port E into the control valve, and flowing out the control valve from the third port H through the second balance valve, and then entering the oil return system, the piston rod of the hydraulic cylinder being extended;
turning on the switch valve and the pressure oil flowing into the control valve from the third port H, and flowing out of the control valve from the fourth port E through the second balance valve, then flowing into the rod cavity of the hydraulic cylinder, the oil in the rodless cavity of the hydraulic cylinder flowing from the second port F into the control valve, and flowing out of the control valve from the first port G through the switch valve and the first balance valve, and then entering the oil return system, the piston rod of the hydraulic cylinder being retracted;
when at rest, no pressure oil flowing into the control valve, and the switch valve being cut off, the oil in the rodless cavity of the hydraulic cylinder being sealed by the control valve, and the hydraulic cylinder entering a holding state.

Further, the switch valve may be a two-position two-way solenoid valve or a proportional valve, and the electronic control unit may be electrically connected to the switch valve, and the conduction and interruption of the switch valve may be controlled by the electronic control unit.

Further, when the hydraulic sensor detects that the pressure on the oil circuit between the switch valve and the first balance valve deviates from the preset range, the electronic control unit controls the alarm device to perform an alarm.

According to a fourth aspect not covered by the claims, an aerial work platform includes a lifting portion and a walking portion, the lifting portion includes the above-described derricking cylinder for driving the lifting portion to be lifted and lowered.

Further, the walking portion includes a base, and the lifting portion includes a folding arm, a main arm, a secondary arm and a work bucket, which are sequentially connected. One end of the folding arm is hinged to a turntable, the turntable is connected to the base by a slewing bearing. One end of the main arm is hinged to the other end of the folding arm, one end of the secondary arm is hinged to the other end of the main arm. The work bucket is connected to the other end of the secondary arm. A small arm head is provided at a joint of the main arm connected with the secondary arm, and a small arm leveling cylinder is provided between the small arm head and the main arm. The folding arm is a telescopic structure or includes a link mechanism, and the folding arm is internally provided with a folding arm telescopic cylinder for controlling the telescopic movement of the folding arm. A folding arm derricking cylinder is provided between the folding arm and the turntable. The main arm has a retractable structure, and is internally provided with a main arm telescopic cylinder for controlling the main arm's telescopic movement. A main arm derricking cylinder is provided between the main arm and the folding arm, and a secondary arm derricking cylinder is provided between the secondary arm and the main arm. At least one of the folding arm derricking cylinder, the main arm derricking cylinder and the secondary arm derricking cylinder is the above-described derricking cylinder.

The beneficial effects of the present disclosure are that:
1. when the first balance valve fails, the oil can be prevented from entering the oil return system from the oil circuit between the first port G and the second port F by cutting the switch valve off, and the operational reliability of the control valve is higher than the conventional one that only the balance valve exists;
2, the control valve is integrated in a valve body, it is modular and easy to install, and versatile, can be installed on different models.
3. when the first balance valve in the rodless cavity of the derricking cylinder fails, the oil can be prevented from returning from the oil circuit between the first port G and the second port F by cutting off the switch valve. The control valve seals the high-pressure oil in the rodless cavity of the derricking cylinder, and the lifting arm remains at rest. It is avoided that the uncontrolled downward movement causes the work bucket to tilt or the overall work platform to tip over, and the safety of the aerial work platform is higher.
4. the hydraulic sensor detects the pressure of the oil circuit between the first balance valve and the switch valve in real time. When the first balance valve fails, the abnormal pressure signal is transmitted to the electronic control unit, and the system alarms and prompts to replace the rodless cavity side first balance valve, to ensure that the oil circuit from the rodless cavity oil always has double insurance, which further improves the reliability of the control valve and the safety of the aerial work platform.

### BRIEF DESCRIPTION OF THE DRAWINGS

In order to more clearly illustrate the technical solution of the present disclosure, the drawings used in the description of the present disclosure will be briefly described below. It is obvious that the drawings described below are only used for some embodiments of the present disclosure. Other drawings may also be obtained from those of ordinary skill in the art without the inventive work.
FIG. 1 is a schematic diagram showing a hydraulic principle of a conventional derricking cylinder.
FIG. 2 is a schematic view showing the hydraulic principle of the conventional derricking cylinder when the amplitude varies upwardly.
FIG. 3 is a schematic diagram showing the hydraulic principle of the conventional derricking cylinder when the amplitude varies downwardly.
FIG. 4 is a schematic view showing the hydraulic principle of the conventional derricking cylinder at rest.
FIG. 5 is a schematic diagram showing a hydraulic principle when a rodless cavity balance valve of the conventional derricking cylinder fails.
FIG. 6 is a schematic view showing a hydraulic principle according to an embodiment of the present disclosure , not covered by the claims.
FIG. 7 is a schematic view showing the hydraulic principle of a derricking cylinder according to an embodiment of the invention.
FIG. 8 is a schematic view showing the hydraulic principle of the derricking cylinder when the amplitude varies upwardly according to an embodiment of the invention.
FIG. 9 is a schematic view showing the hydraulic principle of the derricking cylinder the amplitude varies downwardly according to an embodiment of the invention.
FIG. 10 is a schematic view showing the hydraulic principle of the derricking cylinder at rest according to an embodiment of the invention.
FIG. 11 is a schematic view showing the hydraulic principle of the derricking cylinder when the rodless cavity balance valve fails according to an embodiment of the invention.
   wherein,
   1 - rodless cavity; 2 - rod cavity; 3 - piston rod; 4 - first one-way functional portion; 5 - first overflow function portion; 6 - second one-way functional portion; 7 - second overflow function portion; 8 - first port G; 9 - second port F; 10 - third port H; 11 - fourth port E; 12 - switch valve; 13 - fifth port M; 14 - second oil mouth; 15 - third oil mouth; 16 - fourth oil mouth; 17 - first oil mouth; 18 - hydraulic sensor.

### DETAILED DESCRIPTION OF EMBODIMENTS

The technical solution in the present disclosure are clearly and completely described below with reference to the accompanying drawings.

FIG. 6 is a schematic diagram of a hydraulic principle of a control valve according to an embodiment of the present disclosure, not covered by the claims. As shown in FIG. 6, the control valve includes a first balance valve provided on an oil circuit between a first port G 8 and a second port F 9, and a second balance valve provided on the oil circuit between a third port H 10 and a fourth port E 11. The first balance valve includes a first one-way functional portion 4 and a first overflow function portion 5, the second balance valve includes a second one-way functional portion 6 and a second overflow function portion 7. A control port of the first overflow function portion 5 communicates with a first oil mouth 17 at one end of the oil inlet port of the second one-way functional portion 6 of the second balance valve.A control port of the second overflow function portion 7 communicates with a second oil mouth 14 at the oil inlet end of the first one-way function portion 4 of the first balance valve. A third oil mouth 15 at one end of the oil inlet port of the first overflow function portion 5 of the first balance valve is connected to the second port F 9, and the second oil mouth 14 is connected to the first port G 8, the first oil mouth 17 is connected to the third port H 10. A fourth oil mouth 16 at one end of the oil inlet port of the second overflow function portion 7 of the second balance valve is connected to the fourth port E 11. The first overflow function portion 5 and the second overflow function portion 7 can be pilot type structures. A spring side control cavity of the first overflow function portion 5 can communicates with the oil outlet port of the first overflow function portion 5, and a spring-free side control cavity of the first overflow function portion 5 can communicates with the oil inlet port of the first overflow function portion 5. A spring side control cavity of the second overflow function portion 7 can be connected to the oil outlet of the second overflow function portion 7, and the spring-free side control cavity of the second overflow function portion 7 may be in communication with the oil inlet of the second overflow function portion 7. The oil circuit between the first port G8 and the second port F9 is further provided with a switch valve 12 connected in series with the first balance valve, the switch valve 12 is provided on the oil circuit between the first port G8 and the first balance valve.

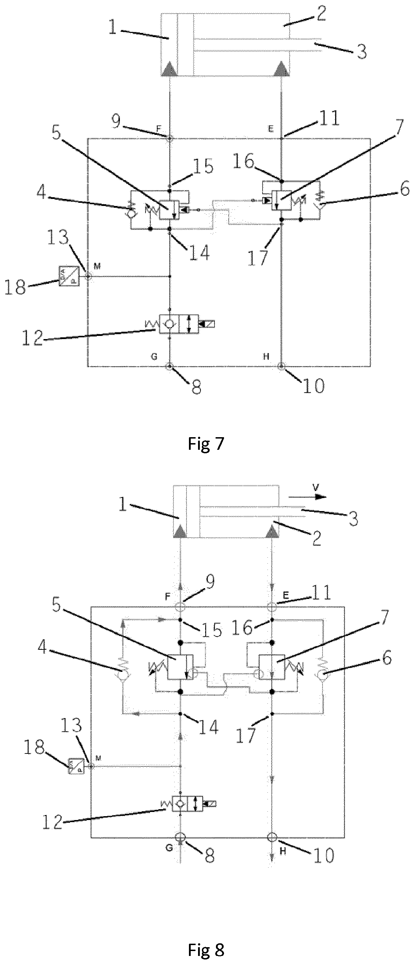

FIG. 7 is a schematic diagram showing a hydraulic principle of a derricking cylinder according to an embodiment of the invention. As shown in FIG. 7, the hydraulic cylinder and the control valve above-mentioned may be included. The hydraulic cylinder can be a single rod double acting piston type hydraulic cylinder. The second port F 9 may be in communication with the rodless cavity 1 of the hydraulic cylinder, and the fourth port E11 may be in communication with the rod cavity 2 of the hydraulic cylinder.

FIG. 8 is a schematic diagram of the hydraulic principle when the derricking cylinder when the amplitude varies upward according to the embodiment of the invention. When the amplitude varies upward, as shown in FIG. 8, the switch valve 12 can enter a turn-on state, and the pressure oil can flow from the first port G 8 into the control valve, and may flow out of the control valve from the second port F 9 through the switch valve 12 and the first one-way function portion 4. While the pressure oil flowing out from the switch valve 12 can enter the first one-way functional portion 4, part of the pressure oil further may flow from the second oil mouth 14 at one end of the oil inlet of the first one-way functional portion 4 of the first balance valve into the control port of second overflow function portion 7, thereby conducting the second overflow function portion 7. The pressure oil flowing out of the control valve from the second port F9 then flows into the rodless cavity 1 of the hydraulic cylinder, and the oil in the rod cavity 2 of the hydraulic cylinder flows into the control valve through the fourth port E11, and flows out of the control valve from the third port H10 through the second overflow function portion 7, and then enters the oil return system. The piston rod 3 of the hydraulic cylinder may be extended, the lifting arm of the aerial work platform may swing upward.

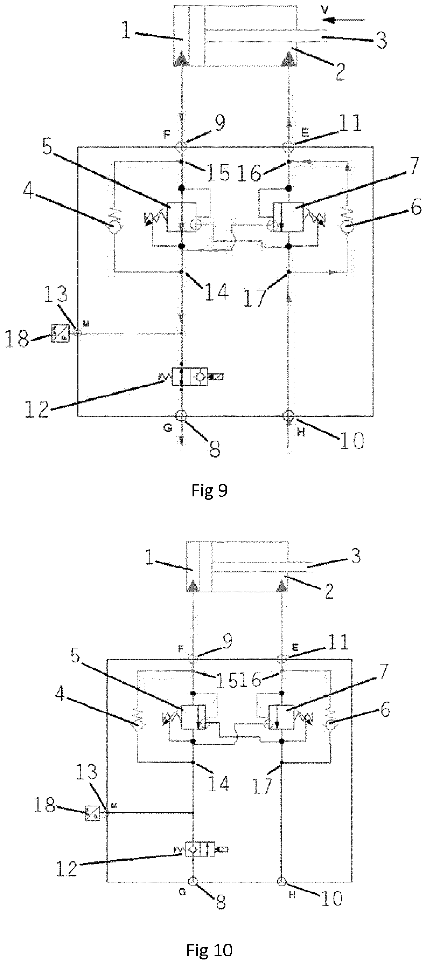

FIG. 9 is a schematic view showing the hydraulic principle of the derricking cylinder when the amplitude varies downward according to the embodiment of the present invention. When the amplitude varies downward, as shown in FIG. 9, the switch valve 12 may enter a turn-on state. The pressure oil can flow into the control valve from the third port H 10, and flow out of the control valve from the fourth port E 11 through the second one-way function portion 6 of the second balance valve. While the pressure oil flowing into the control valve flows into the second one-way functional portion 6, a part of the pressure oil may further flow from the second oil mouth 17 at the end of the oil inlet port of the second one-way functional portion 6 of the second balance valve into the control port of the first overflow function portion 5, thereby turning on the first overflow function portion 5. The pressure oil flowing out of the control valve from the fourth port E 11 then flows into the rod cavity 2 of the hydraulic cylinder, and the oil in the rodless cavity 1 of the hydraulic cylinder flows from the second port F 9 into the control valve, and flows out of the control valve from the first port G 8 through the first overflow function portion 5 and the switch valve 12, and then enters the oil return system. The piston rod 3 of the hydraulic cylinder is retracted, the lifting arm of the aerial work platform varies downward.

FIG. 10 is a schematic view showing the hydraulic principle of the derricking cylinder when at rest. When the derricking cylinder is at rest, as shown in FIG. 10, no pressure oil flows into the control valve, and the switch valve 12 is cut off. The oil in the rodless cavity 1 of the hydraulic cylinder can be sealed by the control valve. Since the first overflow function portion 5 or the second overflow function portion 7 is turned off without the pressure oil flowing in, the oil in the rodless cavity 1 and the rod cavity 2 of the hydraulic cylinder cannot return through the first balance valve or the second balance valve. The piston rod 3 of the hydraulic cylinder neither protrudes nor retracts, and the lifting arm of the aerial work platform is at rest.

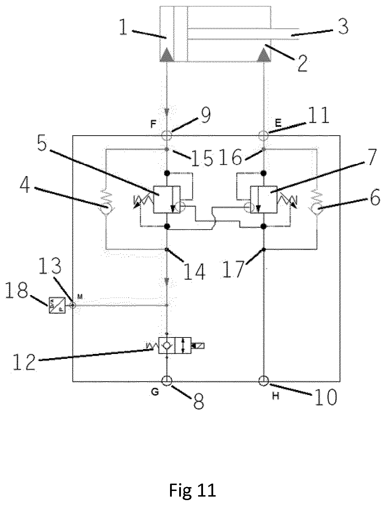

FIG. 11 is a schematic diagram showing the hydraulic principle when the rodless cavity balance valve of the derricking cylinder fails according to the embodiment of the present of the invention.

When the first balance valve of the above-described derricking cylinder fails, as shown in FIG. 11. The oil in the rodless cavity 1 may flow through the first balance valve, but since the switch valve 12 is cut off, the oil flowing through the first balance valve cannot flow out from the first port G 8 through the switch valve 12 or enters the oil return system. The oil in the rodless cavity 1 of the hydraulic cylinder is still sealed by the control valve, and the lifting arm of the aerial work platform does not move downward, causing the work bucket to tilt or causing the whole work platform to tip over, the safety of the aerial work platform is higher.

The aerial work platform may further include an oil supply system for supplying pressure oil to the derricking cylinder, and an oil return system for receiving the return oil. Wherein the oil supply system and the oil return system can conventionally include a fuel tank, a fuel supply pump, a fuel supply pipeline, a control valve and the return pipeline, etc.. The above system and the derricking cylinder may have the existing connections and working modes. When the above-mentioned derricking cylinder of the application is used for the existing aerial work platform, the oil supply system and the oil return system need not be modified, and only need to be connected with the existing oil supply system and the oil return system to operate normally, The application does not describe the oil supply system and the oil return system of the aerial work platform.

As shown in FIGS. 7 to 11, the control valve further includes a hydraulic sensor 18 for monitoring the pressure on the oil circuit between the switch valve 12 and the first balance valve, and an electronic control unit electrically connected to the hydraulic sensor 18, and an alarm device electrically coupled to the electronic control unit. When the hydraulic sensor 18 detects that the pressure on the oil circuit between the switch valve 12 and the first balance valve deviates from the preset range, the electronic control unit can control the alarm device to perform an alarm. The preset range can be determined through experiments, and the alarm operation of the alarm device can display the alarm information on the display or emit an alarm signal such as light or sound, which will not be described here. After the alarm device alarms, the maintenance personnel can know that the first balance valve has failed, and may replace the first balance valve to prevent long-term use causing the switch valve 12 fails, resulting in that the oil in the rodless cavity 1 cannot be sealed when the derricking cylinder is at rest, and when the arm descends, the work bucket may be tilted or the entire aerial work platform may be tipped over to cause a dangerous accident. Therefore, by replacing the failed first balance valve, the control valve can ensure double-insurance on the oil circuit from the rodless cavity 1 oil outflow, further improve the reliability of the control valve and the safety of the aerial work platform.

Preferably, the switch valve 12 may be a two-position two-way solenoid valve or a proportional valve, and the electronic control unit may be electrically connected to the switch valve 12, and the turn-on and turn-off of the switch valve 12 may be controlled by the electronic control unit. The control of the switch valve 12 is fast and efficient. The switch valve 12 can also be other types of valves, such as a valve of a mechanical control switch, a two-position three-way solenoid valve or a proportional valve, etc., as long as the ON/OFF of the switch valve 12 can be controlled The example is not limited to this.

It should be understood that the above-mentioned control unit may be obtained by extending the electronic control unit of an existing aerial work platform, or an electronic control unit additionally provided. The electronic control unit may include a memory, a processor, and a communication module and the like. The electronic control unit can be electrically connected with the control system of the aerial work platform, the hydraulic sensor 18, the electromagnetic switch valve 12 and the alarm device through the communication module, and can receive control signals from the control system such as the signals of upward variable amplitude, downward variable amplitude and at rest, etc.. The electronic control unit may obtain an execution instruction after the memory and the processor process the received control signal, and can send an execution command to the electromagnetic switch valve 12 through the communication module to control ON/OFF of the electromagnetic switch valve 12, and receive the pressure signal from the hydraulic sensor 18. The electronic control unit may obtain an execution instruction after the memory and the processor process the received pressure signals, and can send an execution instruction to the alarm device through the communication module to control whether the alarm device performs an alarm.

The first balance valve, the second balance valve and the switch valve 12 are integrated in one valve body. The first port G8, the second port F9, the third port H10 and the fourth port E11 are all located on the surface of the valve body, and the surface of the valve body is further provided with a fifth port M13 connected to the oil circuit between the switch valve 12 and the first balance valve. The hydraulic sensor 18 can be provided on the fifth port M13. The modular manufacture of the control valve make it easy to install and versatile and can be installed on different models.

It should be understood that the above control valve is a separate structure from the derricking cylinder, and is not limited to use with the above single-rod double-acting piston hydraulic cylinder, and can be used for other forms of hydraulic cylinders; Except used in the variable-speed cylinder, it can also be used in the telescopic cylinder of the aerial work platform; or it will not be used with the oil cylinder, but be used separately for other oil circuits that need to control the oil intake and oil return instead.

It should be understood that the first overflow function portion 5 of the first balance valve of the above embodiment and the second overflow function portion 7 of the second balance valve preferably adopt a pilot type structure. Optionally, the above first overflow function portion 5 of the first balance valve and the second overflow function portion 7 of the second balance valve may also adopt a common direct-acting structure, and the spring side control cavity of the overflow function portion does not have an external discharge port.

It should be understood that the first balance valve and the second balance valve are simultaneously operated for controlling the oil intake and the oil return, and the specific structures of the above-described first balance valve and second balance valve are not limited to the structure of the above embodiment, as long as the first balance valve and the second balance valve are ensured to work synchronously so that the control valve can control the hydraulic cylinder the oil intake and the oil return. The first balance valve includes the first one-way functional portion 4 and the first overflow function portion 5, the second balance valve includes the second one-way functional portion 6 and the second overflow function portion 7. The control port of the first overflow function portion 5 communicates with the first oil mouth 17 at one end of the oil inlet of the second one-way function portion 6 of the second balance valve, and the control port of the second overflow function portion 7 communicates with the second oil mouth 14 at one end of the oil inlet of the first one-way function portion 4 of the first balance valve, and the third oil mouth 15 at one end of the oil inlet of the first overflow function portion 5 of the first balance valve is connected to the second port F9. The first balance valve and the second balance valve may be other structures, as long as one oil mouth of the first balance valve is connected to the first port G8, and the other oil mouth of the first balance valve is connected to the second port F9, one oil mouth of the second balance valve is connected to the third port H10, and the other oil mouth of the second balance valve is connected to the fourth port E11.

It should be understood that the function of the second balance valve provided on the oil circuit between the third port H10 and the fourth port E11 is to prevent the piston rod 3 being rebounded caused by the pressure wave shock when the first balance valve is cut off, then resulting in discomfort to the operator since the lifting portion of the aerial work platform shakes. When this point is not taken into account, not according to the invention, the second balance valve may not be provided on the oil circuit between the third port H10 and the fourth port E11. At this time, the control port of the first overflow function portion communicate with the oil circuit between the third port H10 and the fourth port E11. Since the hydraulic oil in the hydraulic cylinder is subjected to pressure under the action of gravity, even on the oil circuit between the third port H10 and the fourth port E11, the second balance valve may not be provided, and the control function of the control valve is not affected.

It should be understood that the control valve of the derricking cylinder of the above embodiment is configured to be able to determine whether the first balance valve is disabled by monitoring the pressure at the second oil mouth 14 of the first balance valve, and the switch valve 12 is set on the oil circuit between the first balance valve and the first port G8, and is connected in series with the first balance valve. Not according to the invention, when it is not necessary to monitor the pressure to determine whether the first balance valve fails and alarms, the switch valve 12 can also be provided on the oil circuit between the first balance valve and the second port F9, and is connected in series with the first balance valve. When the derricking cylinder is at rest, the above control valve can still provide double insurance by cutting off the switch valve 12 and cutting off the first balance valve return circuit. Seal the oil in the rodless cavity 1 of the derricking cylinder. Even if the first balance valve fails, the oil can be prevented from returning from the oil circuit between the first port G8 and the second port F9 by cutting off the switch valve 12, and the control valve still has high operational reliability.

It should be understood that the control valve of the derricking cylinder of the above embodiment will make the first balance valve, the second balance valve, and the switch valve 12 integrated in one valve body, and the first balance valve, the second balance valve, and not according to the invention, the switch valve 12 may be divided into different valve bodies.

The above-described derricking cylinder can be used in an aerial work platform disclosed in the aforementioned Chinese Patent with Publication No. CN201810449467.2. The aerial work platform includes a lifting portion and a walking portion, the walking portion includes a base, and the lifting portion includes a folding arm, a main arm, a secondary arm and a work bucket which are sequentially connected. One end of the folding arm is hinged to a turntable, the turntable is connected to the base by a slewing bearing. One end of the main arm is hinged to the other end of the folding arm, one end of the secondary arm is hinged to the other end of the main arm. The work bucket is connected to the other end of the secondary arm. A small arm head is provided at a joint of the main arm connected with the secondary arm, and a small arm leveling cylinder is provided between the small arm head and the main arm. The folding arm is a telescopic structure or includes a link mechanism, and the folding arm is internally provided with a folding arm telescopic cylinder for controlling the telescopic movement of the folding arm. A folding arm derricking cylinder is provided between the folding arm and the turntable. The main arm has a retractable structure, and is internally provided with a main arm telescopic cylinder for controlling the main arm's telescopic movement. A main arm derricking cylinder is provided between the main arm and the folding arm, and a secondary arm derricking cylinder is provided between the secondary arm and the main arm. At least one of the folding arm derricking cylinder, the main arm derricking cylinder and the secondary arm derricking cylinder is the above-described derricking cylinder.

It should be understood that the above-described derricking cylinder is not limited to the aerial work platform of the above specific structure, and can also be used for an aerial work platform having other lifting portions of other structures, and the above-mentioned derricking cylinder is provided on the lifting portion of the aerial work platform, such that it is used to drive the lifting portion for lifting.

The above is only a specific embodiment of the present disclosure, but the scope of the present disclosure is not limited thereto. The scope of protection of the present invention is determined by the scope of the claims.

## Claims

1. A control valve comprising an oil circuit provided between a first port G (8) and a second port F (9), and an oil circuit provided between a third port H (10) and a fourth port E (11); wherein a first balance valve connected in series with a switch valve (12) is provided in the oil circuit between the first port G (8) and the second port F (9);
wherein a second balance valve is provided on the oil circuit between the third port H (10) and the fourth port E (11);
wherein the first balance valve, the second balance valve, and the switch valve (12) are integrated in one valve body, the first port G (8), the second port F (9), the third port H (10) and the fourth port E (11) are located on a surface of the valve body;
wherein the first balance valve comprises a first one-way functional portion (4) and a first overflow function portion (5), and the second balance valve comprises a second one-way functional portion (6) and a second overflow function portion (7); the control port of the first overflow function portion (5) is in communication with a first oil mouth (17) located at one end of the oil inlet of the second one-way function portion (6) of the second balance valve; and the control port of the second overflow function portion (7) is in communication with a second oil mouth (14) located at one end of the oil inlet of the first one-way function portion (4) of the first balance valve; and a third oil mouth (15) located at one end of the oil inlet of the first overflow function portion (5) of the first balance valve is connected to the second port F (9); and the second oil mouth (14) is connected to the first port G (8), the first oil mouth (17) is connected to the third port H (10); and a fourth oil mouth (16) located at one end of the oil inlet of the second overflow function portion (7) of the second balance valve is connected to the fourth port E (11);
wherein the switch valve (12) is provided on an oil circuit between the first port G (8) and the first balance valve, and **characterized in that** the control valve further comprises a hydraulic sensor (18) configured to monitor the pressure on the oil circuit between the switch valve (12) and the first balance valve; an electronic control unit electrically connected to the hydraulic sensor (18); and an alarm device electrically connected to the electronic control unit.

2. The control valve according to claim 1, wherein both the first overflow function portion (5) and the second overflow function portion (7) are pilot type structures, and a spring side control cavity of the first overflow function portion (5) communicates with the oil outlet of the first overflow function portion (5), a spring-free side control cavity of the first overflow function portion (5) communicates with the oil inlet of the first overflow function portion (5); and a spring side control cavity of the second overflow function portion (7) communicates with the oil outlet of the second overflow function portion (7), and a spring-free side control cavity of the second overflow function portion (7) is in communication with the oil inlet of the second overflow function portion (7).

3. The control valve according to claim 1, wherein the valve body surface is further provided with a fifth port M (13), and the fifth port M (13) is connected to the oil circuit between the switch valve (12) and the first balance valve, and the hydraulic sensor (18) is arranged on the fifth port M (13).

4. A derricking cylinder, wherein comprising: a hydraulic cylinder and a control valve according to any one of claims 1 to 3, the hydraulic cylinder being a single rod double acting piston type hydraulic cylinder, the second port F (9) communicates with the rodless cavity (1) of the hydraulic cylinder, and the fourth port E (11) communicates with the rod cavity (2) of the hydraulic cylinder.

5. A working method of a derricking cylinder, wherein the derricking cylinder comprises a hydraulic cylinder and the control valve according to claim 1, the hydraulic cylinder is a single rod double acting piston type hydraulic cylinder, a second port F (9) is in communication with the rodless cavity (1) of the hydraulic cylinder, and the fourth port E (11) is in communication with a rod cavity (2) of the hydraulic cylinder; the working method comprises:
turning on the switch valve (12) and pressure oil flowing from the first port G (8) into the control valve, and flowing out of the control valve from the second port F (9) through the switch valve (12) and the first balance valve, and then flowing into the rodless cavity (1) of the hydraulic cylinder, the oil in the rod cavity (2) of the hydraulic cylinder flowing from the fourth port E (11) into the control valve, and flowing out of the control valve from the third port H (10) through the second balance valve, and then entering the oil return system, the piston rod (3) of the hydraulic cylinder being extended;
turning on the switch valve (12) and the pressure oil flowing into the control valve from the third port H (10), and flowing out of the control valve from the fourth port E (11) through the second balance valve, then flowing into the rod cavity (2) of the hydraulic cylinder, the oil in the rodless cavity (1) of the hydraulic cylinder flowing from the second port F (9) into the control valve, and flowing out of the control valve from the first port G (8) through the switch valve (12) and the first balance valve, and then entering the oil return system, the piston rod (3) of the hydraulic cylinder being retracted;
when at rest, no pressure oil flowing into the control valve, and the switch valve (12) being cut off, the oil in the rodless cavity (1) of the hydraulic cylinder being sealed by the control valve.

6. The working method according to claim 5, wherein the switch valve (12) is a two-position two-way solenoid valve, and the electronic control unit is electrically connected to the switch valve (12), that conduction and interruption of the switch valve (12) is controlled by the electronic control unit.

7. The working method according to claim 5, wherein when the hydraulic sensor (18) detects that the pressure on the oil circuit between the switch valve (12) and the first balance valve deviates from a preset range, the electronic control unit controls the alarm device to perform an alarm.

## Patentansprüche

1. Ein Steuerventil mit einem Ölkreislauf, der zwischen einem ersten Anschluss G (8) und einem zweiten Anschluss F (9) vorgesehen ist, und einem Ölkreislauf, der zwischen einem dritten Anschluss H (10) und einem vierten Anschluss E (11) vorgesehen ist;
ein erstes Ausgleichsventil, das mit einem Schaltventil (12) in Reihe geschaltet und im Ölkreislauf zwischen dem ersten Anschluss G (8) und dem zweiten Anschluss F (9) vorgesehen ist;
wobei ein zweites Ausgleichsventil auf dem Ölkreislauf zwischen dem dritten Anschluss H (10) und dem vierten Anschluss E (11) vorgesehen ist;
wobei das erste Ausgleichsventil, das zweite Ausgleichsventil und das Schaltventil (12) in einem Ventilkörper integriert sind, der erste Anschluss G (8), der der zweite Anschluss F (9), der dritte Anschluss H (10) und der vierte Anschluss E (11) sind Ventilkörpers angeordnet;
wobei das erste Ausgleichsventil einen ersten Einweg-Funktionsabschnitt (4) und einen ersten Überlauf-Funktionsabschnitt (5) und das zweite Ausgleichsventil einen zweiten Einweg-Funktionsabschnitt (6) und einen zweiten Überlauf-Funktionsabschnitt (7) aufweist; der Steueranschluss des ersten Überlauffunktionsteils (5) in Verbindung mit einer ersten Ölmündung (17) steht, die sich an einem Ende des Öleinlasses des zweiten Einwegfunktionsteils (6) des zweiten Ausgleichsventils befindet; und der Steueranschluss des zweiten Überlauffunktionsteils (7) mit einer zweiten Ölmündung (14) in Verbindung steht, die sich an einem Ende des Öleinlasses des ersten Einwegfunktionsteils (4) des ersten Ausgleichsventils befindet; und eine dritte Ölmündung (15), die sich an einem Ende des Öleinlasses des ersten Überlauffunktionsteils (5) des ersten Ausgleichsventils befindet und mit dem zweiten Anschluss F (9) verbunden ist; die zweite Ölmündung (14) ist mit dem ersten Anschluss G (8) verbunden, die erste Ölmündung (17) ist mit dem dritten Anschluss H (10) verbunden; und eine vierte Ölmündung (16), die sich an einem Ende des Öleinlasses des zweiten Überlauffunktionsteils (7) des zweiten Ausgleichsventils befindet, ist mit dem vierten Anschluss E (11) verbunden;
wobei das Schaltventil (12) an einem Ölkreislauf zwischen dem ersten Anschluss G (8) und dem ersten Ausgleichsventil vorgesehen ist, **dadurch gekennzeichnet, dass** das Steuerventil ferner einen hydraulischen Sensor (18) umfasst, der so konfiguriert ist, dass er den Druck in dem Ölkreislauf zwischen dem Schaltventil (12) und dem ersten Ausgleichsventil überwacht; ein elektronisches Steuereinheit, das elektrisch mit dem Hydrauliksensor (18) verbunden ist; und ein mit der elektronischen Steuereinheit elektrisch verbundenes Alarmgerät.

2. Steuerventil nach Anspruch 1, wobei sowohl der erste Überlauffunktionsabschnitt (5) als auch der zweite Überlauffunktionsabschnitt (7) Pilotstrukturen sind und ein federseitiger Steuerhohlraum des ersten Überlauffunktionsabschnitts (5) mit dem Ölauslass des ersten Überlauffunktionsabschnitts (5) in Verbindung steht, ein federfreier seitlicher Steuerhohlraum der ersten Überlauffunktion (5) mit dem Öleinlass des ersten Überlauffunktionsteils (5) in Verbindung steht; und ein federseitiger Steuerhohlraum des zweiten Überlauffunktionsabschnitts (7) dem Ölauslass des zweiten Überlauffunktionsabschnittes (7) in Verbindung steht, und ein federfreier seitlicher Steuerhohlraum des zweiten Überlauffunktionsabschnittes (7) mit dem Öleinlass des zweiten Überlauffunktionsabschnittes (7) in Verbindung steht.

3. Steuerventil nach Anspruch 1, wobei die Ventilkörperoberfläche ferner mit einem fünften Anschluss M (13) versehen ist, und der fünfte Anschluss M (13) mit dem Ölkreislauf zwischen dem Schaltventil (12) und dem ersten Ausgleichsventil verbunden ist, und der hydraulische Sensor (18) am fünften Anschluss M (13) angeordnet ist.

4. Entriegelungszylinder, der Folgendes umfasst: einen Hydraulikzylinder und ein Steuerventil nach einem der Ansprüche 1 bis 3, wobei es sich bei dem Hydraulikzylinder um einen Hydraulikzylinder mit einer Stange und einem doppelt wirkenden Kolben handelt, wobei der zweite Anschluss F (9) mit dem stangenlosen Hohlraum (1) des Hydraulikzylinders in Verbindung steht, und der vierte Anschluss E (11) mit dem Stangenhohlraum (2) des Hydraulikzylinders in Verbindung steht.

5. Arbeitsweise für einen Derricking-Zylinder, wobei der Derricking-Zylinder einen Hydraulikzylinder und das Steuerventil nach Anspruch 1 umfasst, wobei der Hydraulikzylinder ein einstangenförmiger, doppelt wirkender Kolben-Hydraulikzylinder ist, ein zweiter Anschluss F (9) in Verbindung mit dem stangenlosen Hohlraum (1) des Hydraulikzylinders steht und der vierte Anschluss E (11) in Verbindung mit einem Stangenhohlraum (2) des Hydraulikzylinders steht; die Arbeitsweise folgendes umfasst:
Einschalten des Schaltventils (12) und Drucköl, das aus dem ersten Anschluss G (8) in das Steuerventil fließt, und aus dem Steuerventil aus dem zweiten Anschluss F (9) durch das Schaltventil (12) und das erste Ausgleichsventil aus dem Steuerventil ausfließt und dann in den stangenlosen Hohlraum (1) des Hydraulikzylinders fließt, wobei das Öl im Stangenhohlraum (2) des Hydraulikzylinders aus dem vierten Anschluss E (11) in das Steuerventil fließt, und aus dem Steuerventil vom dritten Anschluss H (10) durch das zweite Ausgleichsventil aus dem Steuerventil ausfließt und dann in das Ölrückführungssystem eintritt, die Kolbenstange (3) des Hydraulikzylinders ist ausgefahren;
Einschalten des Schaltventils (12) und das Drucköl strömt vom dritten Anschluss H (10) in das Steuerventil und aus dem vierten Anschluss E (11) aus dem Steuerventil durch das zweite Ausgleichsventil in den Stangenhohlraum (2) des Hydraulikzylinders, wobei das Öl im stangenlosen Hohlraum (1) des Hydraulikzylinders aus dem zweiten Anschluss F (9) in das Steuerventil fließt und aus dem Steuerventil aus dem ersten Anschluss G (8) durch das Schaltventil (12) und das erste Ausgleichsventil aus dem Steuerventil strömt und tritt dann in das Ölrückführungssystem ein, die Kolbenstange (3) des Hydraulikzylinders wird zurückgezogen;
im Ruhezustand fließt kein Drucköl in das Steuerventil, und das Schaltventil (12) ist abgeschaltet, wobei das Öl im stangenlosen Hohlraum (1) des Hydraulikzylinders durch das Steuerventil abgedichtet wird.

6. Arbeitsweise nach Anspruch 5, **dadurch gekennzeichnet, dass** das Schaltventil (12) ein Zweiwege-Magnetventil ist, und die elektronische Steuereinheit mit dem Schaltventil (12) elektrisch verbunden ist, dass das Schalten und Unterbrechen des Schaltventils (12) durch die elektronische Steuereinheit gesteuert wird.

7. Arbeitsweise nach Anspruch 5, wobei, wenn der Hydrauliksensor (18) feststellt, dass der Druck auf dem Ölkreislauf zwischen dem Schaltventil (12) und dem ersten Ausgleichsventil von einem voreingestellten Bereich abweicht, die elektronische Steuereinheit das Gerät so steuert, dass es einen Alarm auslöst.

## Revendications

1. Vanne de régulation comprenant un circuit d'huile entre le premier orifice G (8) et le deuxième orifice F (9), et un circuit d'huile entre le troisième orifice H (10) et le quatrième orifice E (11);
une première vanne d'équilibrage montée en série avec une vanne de commutation (12) est montée dans le circuit d'huile entre le premier orifice G (8) et le deuxième orifice F (9);
où une deuxième vanne d'équilibrage est montée sur le circuit d'huile entre le troisième orifice H (10) et le quatrième orifice E (11);
où la première vanne d'équilibrage, la deuxième vanne d'équilibrage et la vanne de commutation (12) sont intégrées dans un corps de vanne, le premier orifice G (8), le deuxième orifice F (9), le troisième orifice H (10) et le quatrième orifice E (11) étant situés sur une surface du corps de vanne;
la première vanne d'équilibrage comprend une première partie fonctionnelle unidirectionnelle (4) et une première partie fonctionnelle de débordement (5), et la deuxième vanne d'équilibrage comprend une deuxième partie fonctionnelle unidirectionnelle (6) et une deuxième partie fonctionnelle de débordement (7); l'orifice de régulation de la première partie fonctionnelle de débordement (5) est en communication avec une première entrée d'huile (17) située à une extrémité de l'entrée d'huile de la deuxième partie fonctionnelle unidirectionnelle (6) de la deuxième vanne d'équilibrage;
et l'orifice de régulation de la deuxième partie fonctionnelle de débordement (7) est en communication avec une deuxième entrée d'huile (14) située à une extrémité de l'entrée d'huile de la première partie fonctionnelle unidirectionnelle (4) de la première vanne d'équilibrage;
et une troisième entrée d'huile (15) située à une extrémité de l'entrée d'huile de la première partie de fonction de débordement (5) de la première vanne d'équilibrage est connectée au deuxième orifice F (9); et la deuxième entrée d'huile (14) est connectée au premier orifice G (8), la première entrée d'huile (17) est connectée au troisième orifice H (10); et
une quatrième entrée d'huile (16) située à une extrémité de l'entrée d'huile de la deuxième partie de fonction de débordement (7) de la deuxième vanne d'équilibrage est connectée au quatrième orifice E (11) ;
où la vanne de commutation (12) est prévue sur un circuit d'huile entre le premier orifice G (8) et la première vanne d'équilibrage, et **caractérisé en ce que** la vanne de régulation comprend en outre un capteur hydraulique (18) configuré pour surveiller la pression sur le circuit d'huile entre la vanne de commutation (12) et la première vanne d'équilibrage; une unité de commande électronique connectée électriquement au capteur hydraulique (18);
et un dispositif d'alarme connecté électriquement à l'unité de commande électronique.

2. Vanne de régulation selon la revendication 1, dans laquelle la première partie de fonction de débordement (5) et la deuxième partie de fonction de débordement (7) sont des structures de type pilote, et une cavité de contrôle côté ressort de la première partie de fonction de débordement (5) communique avec la sortie d'huile de la première partie de fonction de débordement (5), une cavité de contrôle côté sans ressort de la première partie de fonction de débordement (5) communique avec l'entrée d'huile de la première partie de fonction de débordement (5); et une cavité de contrôle côté ressort de la deuxième partie de fonction de débordement (7) communique avec la sortie d'huile de la deuxième partie de fonction de débordement (7), et une cavité de contrôle côté sans ressort de la deuxième partie de fonction de débordement (7) est en communication avec l'entrée d'huile de la deuxième partie de fonction de débordement (7).

3. Vanne de régulation selon la revendication 1, dans laquelle la surface du corps de la vanne est en outre pourvue d'un cinquième orifice M (13), et le cinquième orifice M (13) est connecté au circuit d'huile entre la vanne de commutation (12) et la première vanne d'équilibrage, et le capteur hydraulique (18) est disposé sur le cinquième orifice M (13).

4. Cylindre de relevage, comprenant: un vérin hydraulique et une vanne de régulation selon l'une quelconque des revendications 1 à 3, le vérin hydraulique étant un vérin hydraulique à piston simple tige à double effet, le deuxième orifice F (9) communique avec la cavité sans tige (1) du vérin hydraulique, et le quatrième orifice E (11) communique avec la cavité de la tige (2) du vérin hydraulique.

5. Méthode de travail d'un cylindre de relevage, dans laquelle le cylindre de relevage comprend un vérin hydraulique et la vanne de régulation selon la revendication 1, le vérin hydraulique est un vérin hydraulique à piston simple tige à double effet, un deuxième orifice F (9) est en communication avec la cavité sans tige (1) du vérin hydraulique, et le quatrième orifice E (11) est en communication avec une cavité de tige (2) du vérin hydraulique; la méthode de travail comprend:
la mise en marche de la vanne de commutation (12) et l'écoulement de l'huile sous pression du premier orifice G (8) dans la vanne de régulation, et l'écoulement de la vanne de régulation du deuxième orifice F (9) à travers la vanne de commutation (12) et la première vanne d'équilibrage, puis l'écoulement dans la cavité sans tige (1) du vérin hydraulique, l'huile contenue dans la cavité de la tige (2) du vérin hydraulique s'écoule du quatrième orifice E (11) dans la vanne de régulation et sort de la vanne de régulation par le troisième orifice H (10) en passant par la deuxième vanne d'équilibrage, puis entre dans le système de retour d'huile, la tige du piston (3) du vérin hydraulique étant sortie;
la mise en marche de la vanne de commutation (12), l'huile sous pression entrant dans la vanne de régulation par le troisième orifice H (10) et sortant de la vanne de régulation par le quatrième orifice E (11) à travers la deuxième vanne d'équilibrage, puis entrant dans la cavité de la tige (2) du vérin hydraulique, l'huile contenue dans la cavité sans tige (1) du vérin hydraulique s'écoulant du deuxième orifice F (9) dans la vanne de régulation et sortant de la vanne de régulation par le premier orifice G (8) à travers la vanne de commutation (12) et la première vanne d'équilibrage, puis entrant dans le système de retour d'huile, la tige de piston (3) du vérin hydraulique étant rétractée;
au repos, aucune pression d'huile ne circule dans la vanne de régulation, et la vanne de commutation (12) étant coupée, l'huile dans la cavité sans tige (1) du vérin hydraulique est verrouillée par la vanne de régulation.

6. Méthode de travail selon la revendication 5, dans laquelle la vanne de commutation (12) est une électrovanne à deux positions et à deux voies, et l'unité de commande électronique est connectée électriquement à la vanne de commutation (12), de sorte que la conduction et l'interruption de la vanne de commutation (12) sont contrôlées par l'unité de commande électronique.

7. Méthode de travail selon la revendication 5, dans laquelle lorsque le capteur hydraulique (18) détecte que la pression du circuit d'huile entre la vanne de commutation (12) et la première vanne d'équilibrage s'écarte d'une plage prédéfinie, l'unité de commande électronique commande le dispositif d'alarme pour qu'il déclenche une alarme.
